Europäisches Patentamt

European Patent Office

Office européen des brevets

(19)

(11) **EP 1 493 041 B1**

(12) **FASCICULE DE BREVET EUROPEEN**

(45) Date de publication et mention
de la délivrance du brevet:
**12.10.2005 Bulletin 2005/41**

(21) Numéro de dépôt: **03743915.5**

(22) Date de dépôt: **07.03.2003**

(51) Int Cl.$^7$: **G01S 5/14**

(86) Numéro de dépôt international:
**PCT/FR2003/000746**

(87) Numéro de publication internationale:
**WO 2003/076962 (18.09.2003 Gazette 2003/38)**

(54) **PROCEDE ET DISPOSITIF DE DETERMINATION DE LA POSITION RELATIVE DE DEUX POINTS**

VERFAHREN UND EINRICHTUNG ZUR BESTIMMUNG DER RELATIVEN POSITION ZWEIER PUNKTE

METHOD AND DEVICE FOR DETERMINING THE RELATIVE POSITION OF TWO POINTS

(84) Etats contractants désignés:
**DE FR NL**

(30) Priorité: **08.03.2002 FR 0202959**

(43) Date de publication de la demande:
**05.01.2005 Bulletin 2005/01**

(73) Titulaire: **Thales**
**75008 Paris (FR)**

(72) Inventeur: **GOUNON, René**
**Thales Intelectual Property**
**F-94117 Arcueil Cedex (FR)**

(74) Mandataire: **Beylot, Jacques**
**THALES Intellectual Property**
**31-33 avenue Aristide Briand**
**94117 Arcueil Cédex (FR)**

(56) Documents cités:
EP-A- 0 886 148  FR-A- 2 715 230
US-A- 5 495 257  US-A- 5 577 122
US-A- 5 680 140  US-A- 5 825 328

**EP 1 493 041 B1**

**Description**

L'invention concerne la détermination précise de la position relative de deux points qui peuvent être éloignés de plusieurs dizaines de kilomètres, à partir de signaux de positionnement par satellites.

Le domaine d'application est celui des techniques nécessitant de connaître en trois dimensions et avec une précision centimétrique, la position d'un mobile par rapport à la position connue d'une station de référence éloignée de plusieurs dizaines de kilomètres. On peut citer la géodésie, la topographie, l'hydrographie, ....

Pour la détermination de la position relative d'un mobile par rapport à une station de référence, on utilise couramment des moyens de mesure de position par satellites, utilisant par exemple les signaux radio émis par les satellites du système GPS (Global Positioning System) ou d'autres systèmes analogues (système GLONASS, futur système GALILEO).

Dans le système GPS, le signal émis par un satellite est codé et on utilise le temps mis par ce signal pour atteindre le point à localiser pour déterminer la distance entre ce satellite et ce point, de préférence appelée pseudo-distance pour tenir compte d'erreurs de synchronisation entre l'horloge du satellite et celle de la station. Ces erreurs de synchronisation sont classiquement éliminées par calcul dès lors qu'on reçoit les signaux d'au moins quatre satellites différents. La détermination de la distance entre le point à localiser et plusieurs satellites permet, connaissant les coordonnées géographiques des satellites, de calculer les coordonnées du point à localiser, le plus souvent des coordonnées exprimées en latitude, longitude et altitude dans un repère terrestre fixe.

Pour déterminer la position relative d'un mobile par rapport à une station de référence, on utilise une méthode dite « GPS différentiel » qui consiste à localiser un point par rapport à une station de référence et non par rapport à un repère terrestre indépendant : en mettant en place un récepteur à la station de référence, on peut déterminer, en utilisant les mesures faites à la station et au mobile, la position relative du mobile par rapport à la station de référence.

L'avantage de cette méthode est qu'elle permet d'accroître la précision du positionnement. En effet les distorsions des mesures liées aux aléas de la propagation des signaux radiosatellitaires sont le plus souvent fortement corrélées dans l'espace, et la connaissance précise de la position de la station de référence permet, en comparant les mesures faites à la station aux distances théoriques, de les compenser en grande partie.

Le temps de propagation est déterminé d'une part en référence à un instant de repère du code pseudo-aléatoire qui module une fréquence porteuse émise par le satellite, cet instant de repère du code permettant notamment de déterminer la position approximative du mobile c'est-à-dire avec une précision de quelques mètres à quelques dizaines de mètres ; le temps de propagation est déterminé d'autre part en référence à la phase de la porteuse reçue, la mesure sur la phase, moins bruitée que la mesure sur le code, permettant de déterminer plus précisément la position du mobile c'est-à-dire avec une précision centimétrique à la condition toutefois qu'on lève l'ambiguïté sur le nombre de tours de phase puisque la phase ne peut être a priori connue qu'à $2\pi$ près, $2\pi$ correspondant à une distance égale à la longueur d'onde du signal radiofréquence émis par les satellites.

Dans ce qui suit on ne s'intéressera qu'aux mesures de phase, les mesures de position de code pouvant être faites d'une manière classique. On considérera donc que les pseudo-distances fournies par le récepteur GPS du mobile ou de la station de référence sont essentiellement des valeurs numériques de phase, une valeur de phase étant directement convertie en valeur de distance, connaissant la longueur d'onde du signal radio émis par les satellites.

Le point central des techniques de positionnement centimétrique utilisant les mesures de phase est le calcul préliminaire dit « de l'initialisation » dans laquelle on résout le problème des ambiguïtés sur le nombre de longueurs d'onde. Ce calcul nécessite classiquement la connaissance préalable d'une position estimée du mobile, qui peut être obtenue en particulier par une méthode telle que celle décrite dans les brevets FR 2 715 230 et FR 2 764 708. Cette position estimée est ensuite recalée sur la position précise, puis validée au cours de ce calcul d'initialisation.

On considère plus particulièrement dans la suite l'étape de recalage de la position estimée vers une position précise.

La qualité de cette position précise dépend notamment de l'éloignement du mobile par rapport à la station de référence.

En effet, les imperfections de la méthode différentielle viennent d'abord du fait que les signaux radio-satellitaires ne rencontrent pas exactement les mêmes conditions de propagation sur les trajets satellite-station et satellite-mobile. Les différences des conditions rencontrées, à peu près nulles à proximité immédiate de la station, s'accroissent naturellement avec l'éloignement.

Cette différence est principalement due à l'ionosphère qui est traversée par les signaux satellite-station et satellite-mobile en des points différents alors que l'ionosphère n'est pas un milieu homogène. Les mesures différentielles basées sur les temps de propagation des signaux satellite-station et satellite-mobile sont alors affectées par cette différence. Cette différence peut conduire à une erreur de position du mobile par rapport à la station de référence pouvant atteindre 1 à plusieurs cm par km d'éloignement. Ainsi, pour un éloignement entre la station et le mobile supérieur à une distance de l'ordre de 10 km, on ne peut garantir la position du mobile par rapport à la station de référence avec une précision centimétrique.

Une première solution décrite dans le brevet n° 2 764 708 propose d'une part de réduire le temps de calcul d'initialisation en particulier le temps de calcul d'une position inambiguë approchée en utilisant notamment des combinaisons linéaires des fréquences d'émission L1 et L2 des satellites du système GPS. Elle propose d'autre part de réduire l'erreur ionosphérique ; la réduction de l'erreur ionosphérique s'applique au cours de l'étape de recalage. Elle consiste à calculer à partir de la position inambiguë approchée, d'une part une position (XL1, YL1, ZL1) pour L1 et d'autre part une position (XL2, YL2, ZL2) pour L2, la position précise (X, Y, Z) résultant alors de la combinaison linéaire suivante :

$$X = (1,65 \ XL1-XL2)/0,65$$

$$Y = (1,65 \ YL1-YL2)/0,65$$

$$Z = (1,65 \ ZL1-ZL2)/0,65.$$

Mais du fait du calcul d'une position sur L1, entaché d'une erreur ionosphérique E et du calcul d'une position sur L2 entaché d'une erreur ionosphérique 1,65*E, il n'est pas toujours possible de lever les ambiguïtés lorsque l'erreur ionosphérique s'accroît ce qui se produit lorsque la distance entre le mobile et la station de référence s'accroît.

Une autre solution classiquement proposée consiste à mettre en place non plus une, mais plusieurs stations de référence constituant ce qui est communément appelé un « Réseau ». Selon cette technique, il est possible de connaître, non seulement les erreurs mesurées en un point comme on le fait dans le cadre du « GPS différentiel », mais aussi leur gradient d'évolution dans la zone. On compense donc en grande partie l'effet des décorellations spatiales des erreurs. Cette solution est efficace, mais elle est bien sûr lourde et coûteuse à mettre en oeuvre en raison de l'infrastructure qu'elle nécessite et du coût des communications entre stations et mobile. De plus, une telle infrastructure n'existera pas partout.

Il a également été proposé une méthode basée sur l'exploitation du fait que l'erreur ionosphérique est fonction de la fréquence (en $1/f^2$ en première approximation).

Il est alors possible de déterminer cette erreur ou de la réduire, voire de l'éliminer, en remplaçant dans les calculs la fréquence f (désignée par L1 ou L2 dans le cas du système GPS) par une combinaison linéaire des fréquences porteuses des signaux émis par les satellites, c'est-à-dire par une combinaison linéaire de L1 et L2.

Le résultat d'une combinaison linéaire de L1, L2 est une nouvelle fréquence L3 à laquelle correspond une longueur d'onde dite longueur d'onde apparente.

Par exemple, dans le cas du système GPS pour lequel L1= 1,57542 GHz (ce qui correspond à une longueur d'onde d'environ 19 cm) et L2= 1,22760 GHz (ce qui correspond à une longueur d'onde d'environ 24 cm), la combinaison de fréquences dite « Iono Free », 9L1-7L2 permet d'éliminer presque complètement l'erreur ionosphérique. La longueur d'onde apparente correspondante est de 5 cm.

Cependant cette méthode est très difficile à appliquer du fait de la grande difficulté à lever les ambiguïtés sur des longueurs d'onde aussi courtes.

Le but de l'invention est donc de proposer un procédé et un dispositif permettant d'obtenir avec une précision centimétrique la position d'un mobile par rapport à une station de référence éventuellement éloignée de plusieurs dizaines de kilomètres.

Pour atteindre ce but, l'invention propose un procédé de détermination de la position relative d'un mobile par rapport à la position connue d'une station de référence, utilisant chacun une antenne de réception de signaux radio issus d'une constellation de satellites de positionnement émettant sur au moins deux fréquences L1 et L2, ce procédé comprenant la détermination périodique pour chacune desdites fréquences, d'un jeu de 2p pseudo-distances, à savoir p pseudo-distances entre le mobile et les p satellites et p pseudo-distances entre la station de référence et les p satellites, la fourniture des pseudo-distances à un organe de calcul de position, et le calcul par cet organe d'une position relative du mobile par rapport à la station de référence à partir d'une part des pseudo-distances et d'autre part d'une position estimée Pe du mobile par rapport à la station de référence, ce procédé étant principalement caractérisé en ce que le calcul de position relative comprend, pour un jeu donné de 4p pseudo-distances reçu par l'organe de calcul les étapes suivantes consistant à :

- a) choisir une combinaison linéaire aL1+bL2 desdites fréquences L1 et L2 parmi une liste prédéterminée comportant au moins deux combinaisons linéaires de fréquences,
- b) calculer les combinaisons linéaires de pseudo-distances correspondant à ladite combinaison linéaire et, à partir de ces combinaisons linéaires de pseudo-distances et de la position estimée Pe, calculer une position relative précise Pp du mobile par rapport à la station de référence,

- c) choisir dans la liste la combinaison linéaire suivante si elle existe, et réitérer dans ce cas l'étape b) en considérant comme position estimée, ladite position précise Pp, et en utilisant le même jeu de 4p pseudo-distances, pour obtenir une position relative encore plus précise,
- d) réitérer l'étape c) pour toutes les combinaisons linéaires de la liste.

On exécute ainsi successivement, à partir du même jeu de mesures de pseudo-distances plusieurs calculs de position du mobile en utilisant différentes combinaisons linéaires de fréquences, la position estimée en entrée d'un calcul étant la position calculée à l'étape précédente.

Dans la technique antérieure un seul calcul était effectué et la combinaison linéaire utilisée dans ce calcul portait sur des positions respectivement calculées pour chacune des fréquences L1 et L2.

Une caractéristique importante de l'invention est que les combinaisons linéaires de la liste sont déterminées de telle sorte que les longueurs d'onde correspondantes diminuent progressivement et que la sensibilité aux erreurs ionosphériques diminue également progressivement et de façon plus rapide que la longueur d'onde.

En d'autres mots, la première combinaison linéaire de fréquences est choisie pour que sa longueur d'onde soit grande, afin de faciliter le lever d'ambiguïté sur le nombre de tours de phase ; mais en contrepartie cette première combinaison linéaire peut correspondre à une sensibilité importante aux erreurs ionosphériques. La position estimée Pe ayant été améliorée suite à ce premier recalage, la deuxième combinaison linéaire de la liste correspond à une longueur d'onde plus faible et à une erreur ionosphérique encore plus faible. Et ainsi de suite, en utilisant des longueurs d'onde et des sensibilités aux erreurs ionosphériques de plus en plus faibles.

Dans le cadre du système GPS, la première combinaison peut être la combinaison L1-L2 (a=1, b=-1) ; la dernière peut être 9L1-7L2 (a=9, b=-7), combinaison connue pour être pratiquement insensible aux erreurs ionosphériques.

Les combinaisons intermédiaires sont de préférence les suivantes (dans l'ordre) :

2L1-L2 ; 3L1-2L2 ; 4L2-3L1.

Selon un autre aspect caractéristique de l'invention, l'étape b) du calcul est effectuée soit en une seule étape utilisant directement les p satellites, soit en deux étapes dont la première utilise seulement un nombre réduit p' (p'<p) de satellites et la deuxième utilise les p satellites. De préférence, c'est seulement lors de l'utilisation de la première combinaison linéaire (de longueur d'onde la plus grande) que le calcul est fait en deux étapes, les autres combinaisons linéaires étant utilisées selon un calcul en une seule étape avec les p satellites.

Lorsque l'étape b est effectuée en deux étapes, elle comprend avantageusement les étapes suivantes consistant à :

b1) calculer une position relative approchée Pa du mobile par rapport à la station de référence; à partir de la combinaison linéaire choisie, de Pe et d'un sous-jeu de 4p' pseudo-distances correspondant à p' satellites où p' est inférieur à p et où les p' satellites choisis dans la constellation de p satellites sont ceux qui ont, compte-tenu de la géométrie actuelle de la constellation, la plus faible sensibilité à une erreur de la position estimée,

b2) calculer une position relative précise Pp du mobile par rapport à la station de référence à partir de ladite combinaison linéaire, de Pa et du jeu complet de 4p pseudo-distances.

Selon une autre caractéristique de l'invention, les 2p pseudo-distances entre les satellites et la station de référence sont déterminées par la station de référence et envoyées par radio au mobile qui comporte alors des moyens de réception pour recevoir ces pseudo-distances et des informations de datation de la mesure de ces pseudo-distances.

Enfin, l'invention a pour objet non seulement le procédé de détermination de position relative d'un mobile par rapport à la position connue d'une station de référence dont les grandes lignes viennent d'être décrites, mais aussi un dispositif de détermination de la position d'un mobile par rapport à une station de référence, capable de mettre en oeuvre ce procédé. Le dispositif selon l'invention comprend au moins, dans le mobile, des moyens pour recevoir des signaux de positionnement par satellite, et des moyens pour recevoir un jeu de 2p pseudo-distances émises par la station de référence et représentant les pseudo-distances entre la station de référence et p satellites pour au moins deux fréquences porteuses différentes L1 et L2, des moyens de détermination périodique d'un jeu de 2p pseudo-distances entre le mobile et les p satellites, des moyens de fourniture des 4p pseudo-distances à un organe de calcul de position, des moyens de stockage d'une liste de combinaisons linéaires des fréquences des porteuses des signaux de positionnement, des moyens pour effectuer, à partir d'un même jeu de 4p pseudo-distances, des calculs successifs de position relative du mobile par rapport à la position de la station de référence, chaque fois à partir d'une combinaison linéaire différente de fréquences choisie dans la liste, d'une position estimée Pe et du jeu de 4p pseudo-distances, la position estimée lors d'un calcul avec une combinaison linéaire donnée de la liste étant la position relative calculée à partir de la combinaison linéaire précédente de la liste.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement une répartition des positions de la station de référence, du mobile et des positions estimée, approchée et précise du mobile par rapport à la position de la station de référence ;
- la figure 2 représente schématiquement le dispositif selon l'invention ;
- la figure 3 représente un organigramme des calculs effectués.

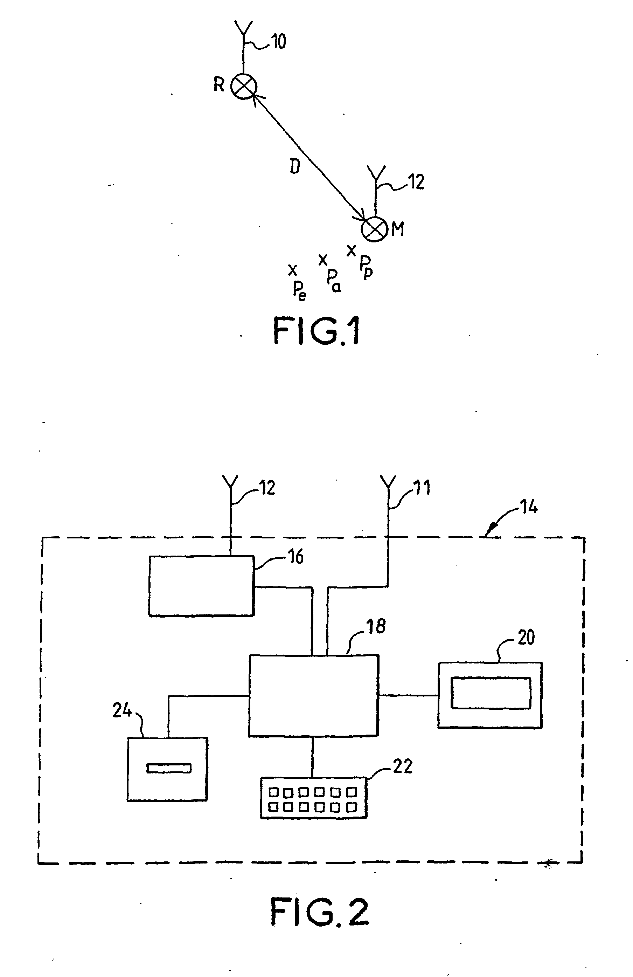

On a représenté figure 1, la position R de la station de référence, éloignée d'une distance D qui peut être de plusieurs dizaines de kilomètres d'un mobile dont la position vraie est M. Sont également représentées sur cette figure les positions estimées Pe, approchée Pa et précise Pp du mobile auxquelles il sera fait référence plus loin. Le point Pe correspond à la position M du mobile estimée à quelques mètres près (1 à 2 mètres par exemple), le point Pa à celle du mobile calculée avec une erreur de un a quelques décimètres, le point Pp à celle du mobile calculée avec une erreur maximum de quelques centimètres.

La station de référence et le mobile sont respectivement équipés d'une antenne de réception 10 et 12 de signaux radio issus des satellites de positionnement (système GPS ou autre) et de moyens de démodulation et de traitement des signaux reçus. Le mobile calcule périodiquement des pseudo-distances entre sa position et la position des satellites à un instant donné. La station calcule de la même manière des pseudo-distances (mesurées au même instant, ou ramenées au même instant de mesure) entre sa position et la position des satellites. Comme on l'a déjà vu dans le préambule, les pseudo-distances sont classiquement fournies sous forme d'une première valeur numérique qui définit la position temporelle du code pseudo-aléatoire émis par un satellite à un moment donné, et d'une deuxième valeur numérique qui définit la phase du signal radiofréquence modulé par ce code au même moment.

Dans les récepteurs (mobiles ou stations de référence) simples, à faible précision, un seul signal radiofréquence codé est utilisé par les circuits de réception. Dans les récepteurs plus précis, auxquels la présente invention s'intéresse, au moins deux signaux de fréquence porteuse différente, L1 et L2, en provenance des satellites, sont traités par le récepteur. Le récepteur calcule donc périodiquement des pseudo-distances pour chacune des fréquences L1 et L2.

Il en résulte que pour une mesure de position à un instant donné, à partir de p satellites, le calcul de position va faire intervenir un jeu de 4p pseudo-distances, donc 4p mesures de phase, qui sont respectivement :

- p mesures de phase entre la station de référence et p satellites, à la fréquence L1,
- p mesures de phase entre le mobile et les p satellites, à la fréquence L1 encore,
- p mesures de phase entre la station de référence et les p satellites à la fréquence L2,
- et p mesures de phase entre le mobile et les p satellites, à la fréquence L2.

La station de référence est équipée de moyens pour émettre vers le mobile les valeurs numériques qu'elle a déterminées. Le mobile est équipé de moyens pour les recevoir (antenne 11 sur la figure 2), de sorte que pour un calcul de position à un moment donné, le mobile dispose non seulement de ses propres mesures de pseudo-distances mais aussi des mesures de pseudo-distances déterminées par la station de référence.

Dans le mobile, les signaux provenant de la station de référence et les signaux directement reçus par le mobile sont utilisés par un ensemble électronique 14 que comporte le mobile et représenté figure 2. On pourrait cependant imaginer la solution inverse où les calculs sont faits par la station de référence, le mobile envoyant à celle-ci les pseudo-distances qu'il a calculées. Dans ce mode, on connaît à chaque instant à la station l'endroit où se trouve le mobile, ce qui peut être intéressant dans certaines applications.

Cet ensemble électronique 14 comprend tout d'abord un circuit de réception de positionnement par satellite 16 capable de déterminer des mesures de pseudo-distances entre son antenne et plusieurs satellites.

Le circuit de réception 16 fournit périodiquement (par exemple toutes les 100 millisecondes) un jeu de 2p pseudo-distances lorsque p satellites sont en vue directe avec l'antenne 12, Il les transmet à un organe de calcul de position relative, 18, qui reçoit par ailleurs le jeu de 2p pseudo-distances correspondant aux 2p pseudo-distances reçues des même p satellites par l'antenne 10 de la station de référence et transmises au mobile par l'antenne 11.

L'organe de calcul de position relative 18 a pour fonction de déterminer la position précise Pp de l'antenne 12 du mobile par rapport à l'antenne 10 de la station de référence.

L'organe de calcul 18 est programmé pour effectuer les calculs désirés et est relié aux organes périphériques nécessaires selon les applications : afficheur 20, clavier 22, lecteur/enregistreur de données ou de programmes 24, moyen de transmission filaire ou radio vers un utilisateur, ou simple interface de sortie vers une ligne de transmission du résultat des calculs.

Les moyens de calcul prévus dans l'organe de calcul sont aptes à effectuer les opérations qu'on va détailler ci-après, à partir d'un jeu de 4p pseudo-distances reçues à un instant donné par le mobile.

Le calcul de position est différentiel, c'est-à-dire qu'on détermine la position du mobile par rapport à la station de référence (que le calcul soit effectué par le mobile ou par la station). On peut donc considérer dans la suite que le calcul de position consiste à calculer la position du mobile à partir de mesures différentielles de pseudo-distances, en faisant des différences entre pseudo-distances mesurées à la station de référence et au mobile. Le calcul fait intervenir une notion de doubles différences de pseudo-distances (différences entre couples de satellites) que l'on précisera plus loin.

Globalement, en utilisant la notion classique de double différence, le principe de calcul différentiel est le suivant :

- on calcule les positions des satellites à l'instant de mesure t, grâce aux éphémérides des satellites ;
- on détermine, à partir des mesures différentielles de pseudo-distances, les distances différentielles entre la station de référence et le mobile selon les axes de visée des satellites. On obtient des distances qu'on peut considérer globalement comme les projections, le long de ces axes, de la distance D entre le mobile et la station de référence ; ce sont des distances mesurées ;
- on calcule pour le même instant de mesure les distances le long des mêmes axes entre la station de référence et une position estimée Pe du mobile ; ce sont des distances estimées ;
- on détermine selon chaque axe la différence entre la distance mesurée et la distance estimée, qu'on peut appeler grandeur d'écart ou « innovation » selon cet axe ;
- on calcule à partir de ces grandeurs d'écart, à l'aide de la matrice des cosinus directeurs représentant les directions des axes de visée des satellites, les écarts entre la position mesurée du mobile et la position estimée ;
- on rajoute à la position estimée initiale les écarts calculés, et on obtient une position calculée du mobile qui est soit une position définitive Pp, soit une nouvelle position estimée Pe en vue d'une étape ultérieure de calcul comme on le verra plus loin.

Comme on l'expliquera plus loin, les doubles différences considérées dans la présente invention sont élaborées, non pas à partir des fréquences directement mesurées, mais à partir de combinaisons linéaires des pseudo-distances mesurées à la fréquence L1 et des pseudo-distances mesurées à la fréquence L2.

Un élément essentiel de la présente invention réside dans le fait qu'on exécute successivement, à partir du même jeu de 4p mesures de pseudo-distances plusieurs calculs de position du mobile en utilisant différentes combinaisons linéaires des phases correspondant aux fréquences L1 et L2. Cela revient à calculer des phases fictives d'une fréquence porteuse qui serait fictivement la combinaison linéaire des fréquences L1 et L2. Plusieurs combinaisons linéaires sont successivement utilisées pour le même jeu de 4p pseudo-distances ; le calcul utilise les pseudo-distances et une position estimée et il aboutit à une position calculée pour une combinaison linéaire donnée ; la position calculée pour cette combinaison linéaire sert de position estimée pour un calcul suivant utilisant une autre combinaison linéaire. La succession de combinaisons linéaires, correspondant à différentes longueurs d'onde apparentes, est telle que la précision du calcul augmente progressivement. Les combinaisons linéaires de fréquences sont choisies d'un calcul à l'autre notamment de manière à ce que la demi-longueur d'onde apparente correspondante soit supérieure ou égale à l'erreur de position résultant du calcul précédent, tout en diminuant l'erreur ionosphérique.

Comme on le verra plus loin, on utilise dans les calculs de position, des doubles différences établies pour des couples de satellites déterminés de façon à augmenter encore la longueur d'onde apparente en prenant en compte la géométrie de la constellation des satellites (la longueur d'onde apparente d'un couple de satellites est d'autant plus grande qu'il est vu sous un angle étroit).

En combinant judicieusement le choix des combinaisons linéaires de fréquences et des couples de satellites, on peut ainsi passer d'une position estimée de précision décimétrique, voire métrique, à la position de précision centimétrique recherchée. Les combinaisons linéaires sont choisies dans une liste dont un exemple est donné plus loin. Cette liste est stockée par exemple dans l'organe 24 pour être utilisée par l'organe de calcul 18.

Dans le cas du GPS, les combinaisons linéaires s'appliquent aux fréquences L1 et L2. Le résultat d'une combinaison linéaire de L1, L2 est une nouvelle fréquence L3 à laquelle correspond une longueur d'onde dite longueur d'onde apparente. Le circuit de réception 16 fournit à l'organe de calcul 18, la phase $\varphi_{L1}$ du signal émis par le satellite pour L1 et la phase $\varphi_{L2}$ du signal émis par le satellite pour L2, ces deux phases étant représentatives de la distance entre le satellite et le mobile ; l'organe de calcul 18 pourra alors utiliser non pas la phase $\varphi_{L1}$ ou la phase $\varphi_{L2}$ mais une phase $\varphi_{L3}$ correspondant à la combinaison linéaire suivante

$$L3 = a.L1 + b.L2 \text{ selon la formule } \varphi_{L3} = a.\ \varphi_{L1} + b.\ \varphi_{L2}$$

De même, la station de référence envoie au mobile des phases représentatives, pour chaque satellite, de la distance entre le satellite et la station de référence et la même combinaison linéaire peut être utilisée pour déterminer une phase apparente à la longueur d'onde L3.

Les nombres a et b sont les coefficients de la combinaison linéaire choisie.

Pour chaque combinaison linéaire, on sait calculer non seulement la longueur d'onde apparente (donc la distance au-delà de laquelle la mesure de phase devient ambiguë) mais aussi la sensibilité aux erreurs de propagation ionosphérique. Si on prend comme valeur d'erreur ionosphérique de référence l'erreur existant à la fréquence L1, on peut calculer la valeur correspondante de l'erreur pour chaque combinaison linéaire. Si par exemple l'erreur sur L1 est de 1cm/km d'éloignement, pour un éloignement de 10 km à plusieurs dizaines de kilomètres, l'erreur sur L1 atteindrait 10 cm à plusieurs dizaines de cm.

Pour corriger cette erreur, on pourrait imaginer d'utiliser directement une combinaison linéaire de fréquences donnant une très faible erreur de propagation ionosphérique ; la combinaison dite « Iono-Free » 9L1-7L2 a une très faible erreur ; mais elle correspond à une longueur d'onde apparente très courte (5cm) de sorte qu'il est impossible de lever son ambiguïté de phase à partir d'une position estimée éloignée.

Pour le GPS et à titre d'exemple préféré, on a établi la liste ordonnée suivante de combinaisons linéaires, avec la longueur d'onde apparente correspondante et le coefficient d'erreur ionosphérique (relativement à la valeur de référence unitaire pour la fréquence L1). Les longueurs d'onde apparentes sont décroissantes, et les coefficients d'erreur ionosphérique décroissent encore plus rapidement.

L1-L2 connue de l'homme du métier sous le nom de « Wide-Lane », qui correspond à une longueur d'onde apparente d'environ 86 cm avec un ratio de l'erreur ionosphérique par rapport à la fréquence L1 de base de 1,3 ;

2L1-L2, qui correspond à une longueur d'onde apparente d'environ 16 cm avec un ratio de l'erreur ionosphérique par rapport à la fréquence L1 de base de 0,56 ;

3L1-2L2, qui correspond à une longueur d'onde apparente d'environ 13 cm avec un ratio de l'erreur ionosphérique par rapport à la fréquence L1 de base de 0,3 ;

4L2-3L1, qui correspond à une longueur d'onde apparente d'environ 11 cm avec un ratio de l'erreur ionosphérique par rapport à la fréquence L1 de base de 0,1 ;

9L1-7L2, dénommée comme on l'a déjà vu combinaison « Iono-Free » qui correspond à une longueur d'onde apparente d'environ 5 cm avec un ratio de l'erreur ionosphérique par rapport à la fréquence L1 de base proche de zéro.

Bien sûr cette séquence de combinaisons linéaires n'est qu'un exemple adapté au GPS dans sa situation actuelle : elle différera notamment dans le cas de fréquences L1 et L2 différentes de celles citées (futures évolutions du GPS, autres systèmes radio-satellitaires tels que Galileo) ; elle peut aussi ne contenir que certaines de ces combinaisons linéaires et/ou en incorporer d'autres.

Le principe est qu'avec un jeu de 4p pseudo-distances combinées linéairement, on peut effectuer un calcul en utilisant une position estimée et la première combinaison linéaire de la liste, avec un faible risque d'ambiguïté de phase du fait de la longueur d'onde importante de cette combinaison ; on aboutit à une première position calculée plus précise que la position estimée. Cette position calculée sert de position estimée pour un autre calcul fait avec les mêmes 4p pseudo-distances mais combinées selon la combinaison suivante de la liste, correspondant à une longueur d'onde apparente plus faible mais encore suffisamment grande pour ne pas introduire d'ambiguïté de phase compte-tenu de l'erreur ionosphérique subsistant suite au premier calcul. On aboutit à une nouvelle position calculée toujours plus précise. Cette position plus précise sert de position estimée pour un troisième calcul avec le même jeu de pseudo-distances combinées selon la troisième combinaison linéaire de la liste, et ainsi de suite. A chaque étape la position est améliorée du fait de la réduction de l'erreur ionosphérique, et l'amélioration de cette position permet de choisir, dans l'étape suivante et sans risque d'erreur d'ambiguïté, une longueur d'onde plus courte qui avec une réduction toujours plus importante de l'erreur ionosphérique permet de rapprocher encore la position calculée de la position vraie.

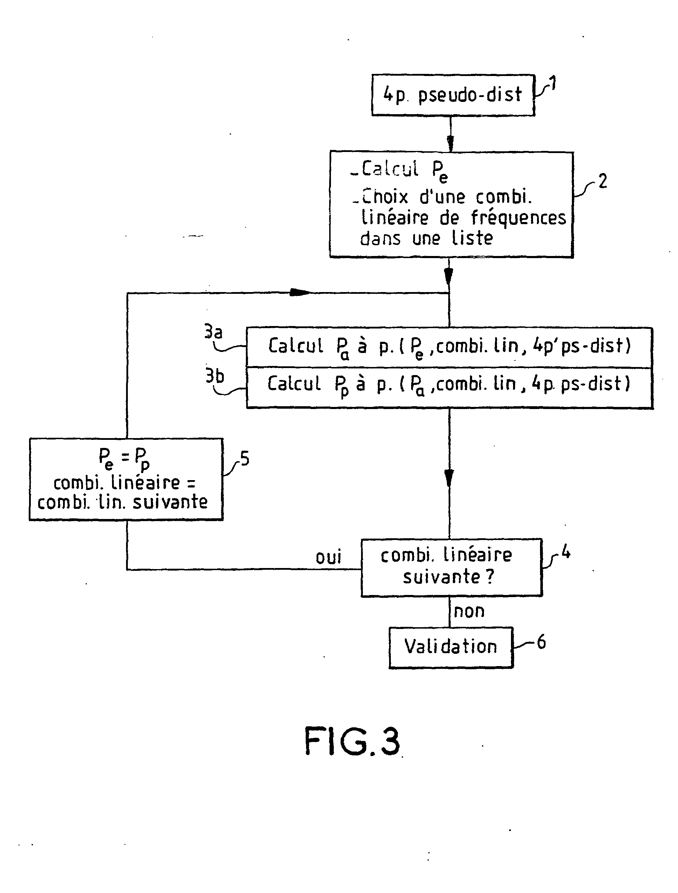

La figure 3 représente schématiquement les grandes étapes des calculs effectués.

Un jeu de 4p pseudo-distances est fourni à l'organe de calcul (étape 1) qui a déterminé par ailleurs une position estimée Pe et qui choisit la première combinaison linéaire de fréquences de la liste prédéterminée (étape 2).

Facultativement, le calcul d'une position à partir d'une position estimée et d'une combinaison linéaire donnée peut se faire en deux grandes étapes :

- une position approchée Pa est calculée à partir de la position estimée Pe, de la combinaison linéaire de fréquences choisie et d'un jeu de 4p' pseudo-distances (étape 3a).
- une position précise Pp est ensuite calculée à partir du point approché Pa, de la même combinaison linéaire de fréquences choisie et du jeu complet de 4p pseudo-distances (étape 3b).

Dans une variante de l'invention, on peut calculer directement en une étape la position précise Pp à partir de la position estimée Pe, de la combinaison linéaire de fréquences choisie et d'un jeu complet de 4p pseudo-distances ;

on peut par exemple retenir le calcul en deux étapes pour la première combinaison linéaire et en une étape pour les combinaisons linéaires suivantes.

Si toutes les combinaisons linéaires de la liste n'ont pas encore été utilisées (étape 4), on choisit la combinaison linéaire suivante de la liste et on réitère les étapes 3a et 3b en considérant comme position estimée la position Pp calculée résultant de l'étape 3b (étape 5).

Si toutes les combinaisons linéaires de la liste ont été utilisées, on valide (étape 6) la position Pp résultant du dernier calcul en déterminant classiquement la valeur de cohérence de la position calculée, pour rejeter les solutions qui ne respecteraient pas des critères de cohérence minimaux. A l'issue de cette étape de validation, la position Pp est la position du mobile établie avec une précision centimétrique.

Dans le cas où la position Pp n'est pas validée, on exécute les étapes décrites à partir d'un autre jeu de 4p pseudo-distances.

On va donner maintenant, à titre d'exemple, le détail du calcul des étapes 3a et 3b qu'on peut faire pour l'obtention d'une position précise Pp à partir d'une position estimée Pe.

La phase d'obtention d'une position approchée Pa (étape 3a) utilise une position estimée initiale Pe ; et elle utilise avantageusement un sous-jeu de 4p' pseudo-distances choisies dans le jeu de 4p pseudo-distances.

On effectue le calcul des positions par un traitement en double différence, sur les 4p' pseudo-distances.

Le traitement dit « en double différence » consiste à travailler non pas directement à partir des différences pour deux satellites entre pseudo-distances mais à partir de différences entre la station de référence et le mobile, de la différence pour deux satellites entre pseudo-distances.

Ces couples de satellites sont choisis en fonction de leur sensibilité aux erreurs de position, cette sensibilité dépendant de la géométrie entre les satellites et le point de mesure. La géométrie de visibilité des p satellites à l'instant de la mesure étant connue grâce aux éphémérides et à la position estimée, on sait classer les couples de satellites dans l'ordre de leur sensibilité croissante aux erreurs de position. On ne prend que les p' satellites correspondant aux couples les moins sensibles, ce qui permet d'augmenter la longueur d'onde apparente. Plus précisément, on calcule les doubles différences du type

$$DDij = (Dim-Djm)-(Dir-Djr),$$

dans lesquelles :

Dim est la pseudo-distance du mobile au satellite de rang i
Djm est la pseudo-distance du mobile au satellite de rang j
Dir est la pseudo-distance de la station de référence au satellite de rang i
Djr est la pseudo-distance de la station de référence au satellite de rang j

Les différences du type Dim-Djm ou Dir-Djr permettent d'éliminer les erreurs communes aux satellites (différences d'horloge entre les satellites et le récepteur).

Les différences entre ces différences, ou doubles différences DDij, permettent d'éliminer les erreurs dues à la propagation atmosphérique ou ionosphérique.

Les doubles différences sont calculées d'une part pour la fréquence L1 (différence DDij1), d'autre part pour la fréquence L2 (différence DDij2). On calcule alors, pour une première combinaison linéaire de fréquences, L3 = aL1+bL2, une combinaison linéaire de doubles différences CLij = aDDij1 +bDDij2. Ce sont ces combinaisons linéaires qui vont être utilisées, et non les classiques doubles différences, pour le calcul de position ; elles représentent une phase à la longueur d'onde apparente de la fréquence fictive L3 et sont exprimées ici en distances.

Les combinaisons de doubles différences CLij sont comparées à des combinaisons similaires, calculées et non mesurées, à partir de la position estimée initiale Pe. La différence qui résulte de cette comparaison est appelée INNOVij, représentant l'écart entre l'estimation et la mesure.

Ces écarts sont reliés aux écarts de longitude, latitude, et altitude DL, DG et DA entre la position estimée (ici la position initiale Pe) et la position calculée (ici la position calculée approchée Pa) par des équations du type

$$INNOVij = DL[cos(Evi)cos(Azi)-cos(Evj)cos(Azj)]$$

$$+ DG[cos(Evi)sin(Azi)-cos(Evj)sin(Azj)]$$

$$+DA[sin(Evi)-sin(Evj)]$$

où Evi, Evj sont les élévations des satellites i et j, et Azi, Azj leurs azimuts.

Un calcul simple, ou un calcul matriciel avec minimisation des erreurs par la technique des moindres carrés si on a plus de 4 satellites, permet de déterminer DL, DG, DA qui représentent des écarts entre position mesurée et position estimée. Ces écarts sont ajoutés à la longitude, la latitude, et l'altitude de la position estimée Pe pour obtenir une position approchée Pa.

A partir de cette position approchée Pa on effectue une deuxième étape de calcul (étape 3b). La deuxième étape est très semblable à la première, mais

- elle utilise toutes les 4p pseudo-distances, c'est-à-dire celles correspondant à tous les couples de satellites,
- elle utilise comme position estimée non pas la position estimée initiale Pe mais la position approchée Pa
- elle utilise pour le calcul d'une position précise Pp un calcul matriciel avec un nombre d'équations en général supérieur au nombre d'inconnues (le nombre p de satellites étant supposé supérieur à 4) ; la détermination des écarts DL, DG, DA entre position estimée et position calculée peut se faire alors classiquement par une méthode des moindres carrés (la position déterminée par calcul est celle qui minimise la valeur quadratique moyenne des résidus).

La position Pp est ensuite utilisée dans un nouveau calcul comme position estimée, à la place de la position Pe, et en faisant intervenir la combinaison linéaire suivante de la liste.

Progressivement, par itération jusqu'au bout de la liste, on arrive à une valeur de plus en plus précise et non ambiguë de la position du mobile.

## Revendications

**1.** Procédé de détermination de la position relative d'un mobile (M) par rapport à la position connue d'une station de référence (R), utilisant chacun une antenne de réception (10,12) de signaux radio issus d'une constellation de satellites de positionnement émettant sur au moins deux fréquences L1 et L2, ce procédé comprenant la détermination périodique pour chacune desdites fréquences, d'un jeu de 2p pseudo-distances, à savoir p pseudo-distances entre le mobile et les p satellites et p pseudo-distances entre la station de référence (R) et les p satellites, la fourniture des pseudo-distances à un organe de calcul de position (18), et le calcul par cet organe d'une position relative du mobile par rapport à la station de référence à partir d'une part des pseudo-distances et d'autre part d'une position estimée Pe du mobile par rapport à la station de référence, ce procédé étant principalement **caractérisé en ce que** le calcul de position relative comprend, pour un jeu donné de 4p pseudo-distances reçu par l'organe de calcul, les étapes suivantes consistant à :

- a) choisir une combinaison linéaire aL1+bL2 desdites fréquences L1 et L2 parmi une liste prédéterminée comportant au moins deux combinaisons linéaires de fréquences,
- b) calculer les combinaisons linéaires de pseudo-distances correspondant à ladite combinaison linéaire et, à partir de ces combinaisons linéaires de pseudo-distances et de la position estimée Pe, calculer une position relative précise Pp du mobile par rapport à la station de référence,
- c) choisir dans la liste la combinaison linéaire suivante si elle existe, et réitérer dans ce cas l'étape b) en considérant comme position estimée, ladite position précise Pp, et en utilisant le même jeu de 4p pseudo-distances, pour obtenir une position relative encore plus précise,
- d) réitérer l'étape c) pour toutes les combinaisons linéaires de la liste.

**2.** Procédé selon la revendication précédente, **caractérisé en ce que** les combinaisons linéaires de la liste sont déterminées de telle sorte que, d'un calcul à l'autre, les longueurs d'onde correspondantes diminuent progressivement et que la sensibilité aux erreurs ionosphériques diminue également progressivement.

**3.** Procédé selon l'une quelconque des revendications précédentes, **caractérisé en ce que** la première combinaison linéaire de la liste est la combinaison L1-L2 (a=1, b=-1) et/ou la dernière combinaison linéaire de la liste est la combinaison 9L1-7L2 (a=9, b=-7), L1 et L2 étant les fréquences d'émission des satellites du système GPS.

**4.** Procédé selon la revendication précédente, **caractérisé en ce que** les combinaisons linéaires intermédiaires sont de préférence les suivantes (dans l'ordre) :
2L1-L2 (a=2, b=-1); 3L1-2L2 (a=3, b=-2) ; 4L2-3L1 (a=4, b=-3).

**5.** Procédé selon l'une quelconque des revendications précédentes, **caractérisé en ce que** l'étape b) comprend les deux étapes suivantes consistant à :

b1) calculer une position relative approchée Pa du mobile par rapport à la station de référence, à partir de la combinaison linéaire choisie, de Pe et d'un sous-jeu de 4p' pseudo-distances correspondant à p' satellites où p' est inférieur à p et où les p' satellites choisis dans la constellation de p satellites sont ceux qui ont, compte-tenu de la géométrie actuelle de la constellation, la plus faible sensibilité à une erreur de position estimée,
b2) calculer une position relative précise Pp du mobile par rapport à la station de référence à partir de ladite combinaison linéaire, de Pa et du jeu complet de 4p pseudo-distances.

**6.** Procédé selon la revendication précédente, **caractérisé en ce que** les étapes b1) et b2) ne sont réalisées que pour la première combinaison linéaire de la liste, une seule étape faisant intervenir les 4p pseudo-distances étant réalisée pour les autres combinaisons linéaires de la liste.

**7.** Procédé selon l'une quelconque des revendications précédentes, **caractérisé en ce que** les 2p pseudo-distances entre les satellites et la station de référence (R) sont déterminées par la station de référence et envoyées par radio au mobile (M) qui comporte alors des moyens de réception (11) pour recevoir ces pseudo-distances et des informations de datation de la mesure de ces pseudo-distances.

**8.** Dispositif de détermination de la position d'un mobile (M) par rapport à une station de référence (R) comprenant au moins, dans le mobile, des moyens (12) pour recevoir des signaux de positionnement par satellite et des moyens (11) pour recevoir un jeu de 2p pseudo-distances émises par la station de référence et représentant les pseudo-distances entre la station de référence et p satellites pour au moins deux fréquences porteuses différentes L1 et L2, des moyens de détermination périodique d'un jeu de 2p pseudo-distances entre le mobile et les p satellites, des moyens de fourniture des 4p pseudo-distances à un organe de calcul (18) de position, des moyens de stockage d'une liste de combinaisons linéaires des fréquences des porteuses des signaux de positionnement, des moyens pour effectuer, à partir d'un même jeu de 4p pseudo-distances, des calculs successifs de position relative du mobile par rapport à la position de la station de référence (R), chaque fois à partir d'une combinaison linéaire différente de fréquences choisie dans la liste, d'une position estimée Pe et du jeu de 4p pseudo-distances, la position estimée lors d'un calcul avec une combinaison linéaire donnée de la liste étant la position relative calculée à partir de la combinaison linéaire précédente de la liste.

**Patentansprüche**

**1.** Verfahren zur Bestimmung der relativen Position einer Mobilstation (M) bezüglich der bekannten Position einer Bezugsstation (R), die je eine Empfangsantenne (10, 12) für Funksignale verwenden, die von einer Konstellation von Positionierungssatelliten stammen, die auf mindestens zwei Frequenzen L1 und L2 senden, wobei dieses Verfahren für jede der Frequenzen die periodische Bestimmung eines Satzes von 2p Pseudoentfernungen, d.h. p Pseudoentfernungen zwischen der Mobilstation und den p Satelliten, und p Pseudoentfernungen zwischen der Bezugsstation (R) und den p Satelliten, die Lieferung der Pseudoentfernungen an ein Organ (18) zur Positionsberechnung, und die Berechnung durch dieses Organ einer relativen Position der Mobilstation bezüglich der Bezugsstation ausgehend einerseits von den Pseudoentfernungen und andererseits von einer geschätzten Position Pe der Mobilstation bezüglich der Bezugsstation aufweist, wobei dieses Verfahren hauptsächlich **dadurch gekennzeichnet ist, dass** die Berechnung der relativen Position für einen gegebenen Satz von 4p vom Rechenorgan empfangenen Pseudoentfernungen die folgenden Schritte aufweist, die darin bestehen:

a) eine lineare Kombination aL1+bL2 der Frequenzen L1 und L2 aus einer vorbestimmten Liste auszuwählen, die mindestens zwei lineare Frequenzkombinationen enthält,
b) die linearen Kombinationen von Pseudoentfernungen entsprechend der linearen Kombination zu berechnen und ausgehend von diesen linearen Kombinationen von Pseudoentfernungen und der geschätzten Position Pe eine genaue relative Position Pp der Mobilstation bezüglich der Bezugsstation zu berechnen,
c) aus der Liste die folgende lineare Kombination auszuwählen, falls sie existiert, und in diesem Fall den Schritt b) zu wiederholen, indem als geschätzte Position die genaue Position Pp genommen wird und indem der gleiche Satz von 4p Pseudoentfernungen verwendet wird, um eine noch genauere relative Position zu erhalten,
d) den Schritt c) für alle linearen Kombinationen der Liste zu wiederholen.

**2.** Verfahren nach dem vorhergehenden Anspruch, **dadurch gekennzeichnet, dass** die linearen Kombinationen der Liste so bestimmt werden, dass von einer Berechnung zur anderen die entsprechenden Wellenlängen progressiv abnehmen und die Empfindlichkeit für die ionosphärischen Fehler ebenfalls progressiv abnimmt.

3. Verfahren nach einem der vorhergehenden Ansprüche, **dadurch gekennzeichnet, dass** die erste lineare Kombination der Liste die Kombination L1-L2 (a=1, b=-1) ist, und/oder die letzte lineare Kombination der Liste 9L1-7L2 (a=9, b=-7) ist, wobei L1 und L2 die Sendefrequenzen der Satelliten des GPS-Systems sind.

4. Verfahren nach dem vorhergehenden Anspruch, **dadurch gekennzeichnet, dass** die linearen Zwischenkombinationen vorzugsweise (in der Reihenfolge) die folgenden sind: 2L1-L2(a=2, b=-1); 3L1-2L2(a=3, b=-2); 4L2-3L1 (a=4, b=-3).

5. Verfahren nach einem der vorhergehenden Ansprüche, **dadurch gekennzeichnet, dass** der Schritt b) die beiden folgenden Schritte enthält, die darin bestehen:

   b1) Berechnen einer angenäherten relativen Position Pa der Mobilstation bezüglich der Bezugsstation, ausgehend von der gewählten linearen Kombination, von Pe und von einem Untersatz von 4p' Pseudoentfernungen, die p' Satelliten entsprechen, wobei p' kleiner ist als p und wobei die aus der Konstellation von p Satelliten ausgewählten p' Satelliten diejenigen sind, die unter Berücksichtigung der aktuellen Geometrie der Konstellation die geringste Empfindlichkeit gegenüber einem geschätzten Positionsfehler haben,
   b2) Berechnen einer genauen relativen Position Pp der Mobilstation bezüglich der Bezugsstation ausgehend von der linearen Kombination, von Pa und vom vollständigen Satz von 4p Pseudoentfernungen.

6. Verfahren nach dem vorhergehenden Anspruch, **dadurch gekennzeichnet, dass** die Schritte b1) und b2) nur für die erste lineare Kombination der Liste durchgeführt werden, wobei ein einziger Schritt, der die 4p Pseudoentfernungen verwendet, für die anderen linearen Kombinationen der Liste durchgeführt wird.

7. Verfahren nach einem der vorhergehenden Ansprüche, **dadurch gekennzeichnet, dass** die 2p Pseudoentfernungen zwischen den Satelliten und der Bezugsstation (R) durch die Bezugsstation bestimmt und per Funk zur Mobilstation (M) gesendet werden, die dann Empfangsmittel (11) aufweist, um diese Pseudoentfernungen und Informationen über die Datierung der Messung dieser Pseudoentfernungen zu empfangen.

8. Vorrichtung zur Bestimmung der Position einer Mobilstation (M) bezüglich einer Bezugsstation (R), die in der Mobilstation mindestens Mittel (12) für den Empfang der Positionierungssignale über Satellit und Mittel (11) für den Empfang eines Satzes von 2p Pseudoentfernungen, die von der Bezugsstation gesendet werden und die Pseudoentfernungen zwischen der Bezugsstation und p Satelliten für mindestens zwei verschiedene Trägerfrequenzen L1 und L2 darstellen, Mittel zur periodischen Bestimmung eines Satzes von 2p Pseudoentfernungen zwischen der Mobilstation und den p Satelliten, Mittel zum Liefern der 4p Pseudoentfernungen an ein Positionsberechnungsorgan (18), Mittel zum Speichern einer Liste von linearen Kombinationen der Frequenzen der Trägerwellen der Positionierungssignale, und Mittel aufweist, um ausgehend von dem gleichen Satz von 4p Pseudoentfernungen aufeinanderfolgende Berechnungen der relativen Position der Mobilstation bezüglich der Bezugsstation (R) jedes Mal ausgehend von einer anderen linearen Kombination von Frequenzen, die aus der Liste ausgewählt wird, von einer geschätzten Position Pe und vom Satz von 4p Pseudoentfernungen durchzuführen, wobei die geschätzte Position bei einer Berechnung mit einer gegebenen linearen Kombination der Liste die relative Position ist, die ausgehend von der vorhergehenden linearen Kombination der Liste berechnet wurde.

**Claims**

1. Method for determining the relative position of a mobile (M) in relation to the known position of a reference station (R), each using an antenna (10, 12) for receiving radio signals originating from an arrangement of positioning satellites transmitting on at least two frequencies L1 and L2, this method comprising the periodic determination, for each of said frequencies, of a set of 2p pseudo-distances, i.e. p pseudo-distances between the mobile and the p satellites and p pseudo-distances between the reference station (R) and the p satellites, the supply of the pseudo-distances to a position-calculating unit (18), and the calculation by this unit of a relative position of the mobile in relation to the reference station based, on the one hand, on the pseudo-distances and, on the other hand, on an estimated position Pe of the mobile in relation to the reference station, this method being mainly **characterized in that**, for a given set of 4p pseudo-distances received by the calculating unit, the calculation of the relative position comprises the following steps which consist in:

- a) choosing a linear combination aL1+bL2 of said frequencies L1 and L2 from a predetermined list comprising at least two linear combinations of frequencies,
- b) calculating the linear combinations of pseudo-distances corresponding to said linear combination, and, on the basis of these linear combinations of pseudo-distances and the estimated position Pe, calculating a precise relative position Pp of the mobile in relation to the reference station,
- c) choosing from the list the following linear combination, if it exists, and, in this case, reiterating step b), considering the estimated position to be said precise position Pp, and using the same set of 4p pseudo-distances to obtain an even more precise relative position,
- d) reiterating step c) for all the linear combinations in the list.

2. Method according to the preceding claim, **characterized in that** the linear combinations in the list are determined in such a way that, from one calculation to the next, the corresponding wavelengths reduce progressively and the sensitivity to ionospheric errors also reduces progressively.

3. Method according to either of the preceding claims, **characterized in that** the first combination in the list is the combination L1-L2 (a=1, b=-1) and/or the last linear combination in the list is the combination 9L1-7L2 (a=9, b=-7), L1 and L2 being the transmission frequencies of the satellites of the GPS system.

4. Method according to the preceding claim, **characterized in that** the intermediate combinations are preferably as follows (in sequence):
   2L1-L2 (a=2, b=-1); 3L1-2L2 (a=3, b=-2); 4L2-3L1 (a=4, b=-3).

5. Method according to any one of the preceding claims, **characterized in that** step b) comprises the following two steps, consisting in:

   b1) calculating an approximate relative position Pa of the mobile in relation to the reference station on the basis of the chosen linear combination of Pe and a subset of 4p' pseudo-distances corresponding to p' satellites, where p' is less than p and where the p' satellites chosen from the arrangement of p satellites are those which, taking into account the current geometry of the arrangement, are least sensitive to an error in the estimated position.
   b2) calculating a precise relative position Pp of the mobile in relation to the reference station on the basis of said linear combination of Pa and the complete set of 4p pseudo-distances.

6. Method according to the preceding claim, **characterized in that** the steps b1) and b2) are only carried out for the first linear combination in the list, a single step involving the 4p pseudo-distances being carried out for the other linear combinations in the list.

7. Method according to any one of the preceding claims, **characterized in that** the 2p pseudo-distances between the satellites and the reference station (R) are determined by the reference station and sent by radio to the mobile (M) which then comprises reception means (11) to receive these pseudo-distances and information for dating the measurement of these pseudo-distances.

8. Device for determining the position of a mobile (M) in relation to a reference station (R), comprising at least, in the mobile, means (12) for receiving satellite positioning signals and means (11) for receiving a set of 2p pseudo-distances transmitted by the reference station and representing the pseudo-distances between the reference station and p satellites for at least two different carrier frequencies L1 and L2, means for periodic determination of a set of 2p pseudo-distances between the mobile and the p satellites, means for supplying the 4p pseudo-distances to a position-calculating unit (18), means for storing a list of linear combinations of the frequencies of the positioning signal carriers, means for carrying out, on the basis of the same set of 4p pseudo-distances, the successive calculations of the relative position of the mobile in relation to the position of the reference station (R), each time based on a different linear combination of frequencies chosen from the list, an estimated position Pe and the set of 4p pseudo-distances, the position estimated in a calculation with a given linear combination from the list being the relative position calculated on the basis of the preceding linear combination from the list.

FIG.1

FIG.2

FIG.3